# EUROPÄISCHE PATENTSCHRIFT

(11) **EP 1 880 905 B1**
(45) Veröffentlichungstag und Bekanntmachung des Hinweises auf die Patenterteilung: **12.03.2014**
(21) Anmeldenummer: 07014123.9
(22) Anmeldetag: 19.07.2007
(51) Int. Cl.: B60R 19/24

(54) **Stossstange mit Halterungen**
Bumper with supports
Pare-chocs avec éléments de support

(30) Priorität: 19.07.2006 DE 102006033822
(43) Veröffentlichungstag der Anmeldung: 23.01.2008
(73) Patentinhaber: Constellium Switzerland AG, 8048 Zürich (CH)
(72) Erfinder: Frank, Simon, 78250 Tengen-Watterdingen (DE); Fritz, Klaus, 78315 Radolfzell (DE); Bompard, Serge, 38500 Voiron (FR); Rebuffet, Olivier, 75014 Paris (FR)
(74) Vertreter: Wagner, Kilian

(56) Entgegenhaltungen:
- EP-A- 1 384 536
- DE-B3-102004 060 088
- US-A- 4 190 276
- US-A- 5 875 875
- US-A1- 2005 253 403
- US-B1- 6 485 072

## Beschreibung

Die Erfindung betrifft eine Stoßstange mit -- an dieser anzubringenden -- von ihr abragende Halterungen zum Befestigen an Längsträgern eines Fahrzeuges, wobei an der Stoßstange in Abstand zueinander als Druckgurt bzw. Zuggurt angeordnete Profilwände und ein Paar diese verbindender Flankenwände ein Hohlprofil bilden. Die Halterung kann als wenigstens eine Seitenwand und zwei an diese anschließende Querwände aufweisendes Hohlprofil mit einem dem Längsträger zugeordneten Hohlprofilträgerabschnitt gestaltet sowie das Hohlprofil der Stoßstange gegebenenfalls zumindest im Bereich der Halterungen gegenüber einer Querebene der Längsachse des Fahrzeugs gewölbt ausgeführt sein.

Eine Stoßstange mit die Längsachse ihres Längsträgers querenden plattenartigen Halterungen beschreibt die EP 0 718 158 B1 unter Hinweis darauf, dass neben der Querschnittsform der Stoßstange auch die Ausgestaltung der Verbindung zum Fahrzeuglängsträger deren Formhaltigkeit beeinflusst sowie deren Kompensationsvermögen für die auftreffende Verformungsenergie.

Zum Befestigen der Stoßstange am Fahrzeug sind eine Vielzahl von Halterungen bekannt -- beispielsweise aus US-A-5,080,410 oder US-A-4,563,028 --, die jedoch kaum zur Verbesserung der Formhaltigkeit einer Stoßstange bei einem Aufprall beizutragen vermögen.

Aus der US 4 190 276 A ist eine Stoßstange mit von ihr abragenden Halterungen bekannt, wobei die Stoßstange ein Hohlprofil umfasst und zudem Kompensationselemente zur Begrenzung einer Verformung der Halterung vorgesehen sind. An der Stoßstange liegt eine mit dieser verschweißten Hochplatte an. Die bekannte Anordnung ist hinsichtlich der Anbindungsstabilität zum Fahrzeug verbesserungsbedürftig. Zudem sollten Verformungen bei Stoßbelastungen minimal werden.

In der EP 0 894 675 A1 ist eine Stoßstangenanordnung beschrieben, bei dem sich die Halteelemente der Stoßstange konisch aufweiten, und so deren Außenwände sich an die Profilwand der Stoßstange anschmiegen, bzw. in diese übergehen.

In Kenntnis dieser Gegebenheiten hat sich der Erfinder das Ziel gesetzt, bei einer Stoßstange der eingangs erwähnten Art, die bei geringem Gewicht ein hohes Maß an Formhaltigkeit bei ausreichendem Kompensationsvermögen für die auftreffende Verformungsenergie aufweist, eine Möglichkeit zu schaffen, eine stabile Anbindung einer Stoßstange an das zugeordnete Fahrzeug zu ermöglichen sowie Verformungen bei Stoßbelastung erheblich zu mindern.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale. Bei angegebenen Benennungsbereichen sollen auch innerhalb der genannten Grenzen liegende Werte als Grenzwerte offenbart und beliebig einsetzbar sein.

Von besonderer Bedeutung ist es, dass dem der Stoßstange fernen Ende der -- aus einem Hohlprofil etwa rechteckigen Querschnitts bestehenden -- Halterung bzw. deren rahmenartiger Endkante als Anschlussorgan eine Heckplatte anliegt, die bevorzugt mit der Halterung verschweißt ist.

Von der Oberfläche der Heckplatte ragt erfindungsgemäß nahe einer Längskante sowie parallel dazu ein der Heckplatte ausgeformter Flankensteg auf, der in Einbaustellung einer Seitenwandaußenfläche der Haltung anliegt und so eine bessere Fixierung ermöglicht. Zur weitergehenden Verbesserung soll an die Außenfläche des Flankensteges ein -- seine der Heckplatte zugeordnete Längskante verstärkender -- Sockelstreifen angeformt sein, der unter Bildung einer zur benachbarten Längskante der Heckplatte geneigten Oberfläche einen sich zu seiner Längskante erweiternden Querschnitt aufweist. Nach einem anderen Merkmal der Erfindung entspricht zudem die axiale Länge des Flankensteges etwa der doppelten Länge seiner axialen Abstände von den Querkanten der Halteplatte. Im Übrigen entspricht die Höhe des Flankensteges etwa dessen halber Länge.

Erfindungsgemäß ist die Einheit aus Stoßstange und Halterung mit Kompensationselementen ausgestattet, welche Verformungen an der Halterung begrenzen, die durch die Stoßstange beeinflussende Druckkräfte ausgelöst werden, beispielsweise durch die Wucht eines Zusammenpralls.

So liegt es im Rahmen der Erfindung, dass die Halterung zumindest einends angeschweißt sowie nahe der Schweißnaht mit wenigstens einem lochartigen Wanddurchbruch in ihrer Wandung ausgestattet ist. Bevorzugt wird dabei, den der Halterung benachbarten beiden Randbereichen der Stoßstange jeweils einen seitlichen Wanddurchbruch zuzuordnen; bevorzugt wird ein etwa kreisförmiger Rand dieses Wanddurchbruches. Letzterer nimmt jene Verformungskräfte auf, wenn er von einer kreisartigen Öffnung zu einem gestreckten Durchbruch wird.

Die beschriebene Kompensation kann auch durch zumindest einen Sackschlitz erfolgen, der in den der Stoßstange fernen Randbereich der Halterung eingeschnitten wird und zu einer ihre Mittellinie kreuzenden Diametralebene geneigt ist. Am Sackschlitz bzw. an einem Paar von beidseits der Mittellinie und parallel zueinander verlaufenden Sackschlitzen endet die Verformungsbelastung.

Ein weiteres Kompensationselement soll als Stab gestaltet sein. Dieser wird -- ähnlich dem vorstehend beschriebenen Sackschlitz -- dem der Stoßstange fernen Randbereich der Halterung zugeordnet als ein zu einer ihre Mittellinie kreuzenden Diametralebene geneigtes Profil, das aus einer unteren Schweißnaht ragt und der Oberfläche der Wandung anliegt. Bevorzugt werden zwei parallele Stäbe an der äußeren Oberfläche der Wandung. Im Falle einer Verformungsbelastung endet auch hier deren Gestaltungskraft an diesen Stäben.

Diese beiden Kompensationselemente können einzeln oder in Verbund mit dem anderen Element eingesetzt werden; dann enthält die Halterung die Wanddurchbrüche und ist an ihrer äußeren Oberfläche mit jenen Stäben ausgestattet.

Einer anderen erfindungsgemäßen Kompensationsart liegt ein von der Stirnkante der Stoßstange ausgehendes Paar von Längs- oder Stirnschlitzen zugrunde, deren jeder in einer der Flankenwände in deren an den Innen- oder Zuggurt der Stoßstange anschließenden Bereich angeordnet ist. Hier soll die Halterung mit dem Zuggurt durch eine Schweißnaht so verbunden werden, dass ein Teil der Wandung dieser Halterung unterhalb der Stirnschlitze an die Stoßstange angefügt ist. Der Stirnschlitz übergreift vorteilhafterweise die Mittellinie der Halterung, und der Endrand des Stirnschlitzes ist der Mittellinie der Halterung benachbart. Als günstig hat es sich dazu erwiesen, die Länge des Stirnschlitzes kürzer zu wählen als den Durchmesser der Halterung.

Erfindungsgemäß können diesen Längs- oder Stirnschlitzen der Stoßstange die Wanddurchbrüche der Halterung und/oder die von deren Randkante ausgehenden Stirnschlitze zugeordnet sein. Statt der Stirnschlitze können auch die sich an die Außen- oder Oberfläche der Halterung anschmiegenden Stäbe zum Einsatz kommen.

Als günstig hat es sich erwiesen, die Außenkontur derdie Längsachse der Halterung querenden -- Heckplatte rechteckig zu gestalten; dabei sollen die Längskanten der Heckplatte länger sein als ihre Querkanten, auch soll an einem der Übergänge zwischen einer Querkante sowie einer Längskante an letztere ein Plattenabschnitt angeformt sein mit einer teilkreisförmigen -- bevorzugt einer halbkreisartigen -- Außenkante. Deren Zentrum bestimmt die Lage eines Durchbruchs, dank dessen die Heckplatte an einem entsprechenden Gegenorgan des Längsträgers vorfixiert zu werden vermag. Zur endgültigen Festlegung sind nach einem weiteren Merkmal der Erfindung in den Bereichen der Übergänge der Querkanten zu den Längskanten -- also auch in den anderen Eckbereichen -- Durchbrüche für Verbindungsorgane vorgesehen.

Der besseren Montage wegen erstrecken sich erfindungsgemäß zwischen dem Flankensteg sowie der ihm fern liegenden Längskante der Heckplatte zu deren Querkanten parallele Langlöcher, bevorzugt zwei Langlöcher, deren jeweiliger Abstand zur Innenfläche des Flankensteges etwa dem halben Abstand zur freien Längskante der Heckplatte entspricht.

Es ergibt sich dank der Ausgestaltung der Heckplatte eine stabile Anbindung einer Stoßstange an einen der Längsträger des zugeordneten Fahrzeuges und damit eine günstige Lösung der vom Erfinder gesehenen Aufgabe.

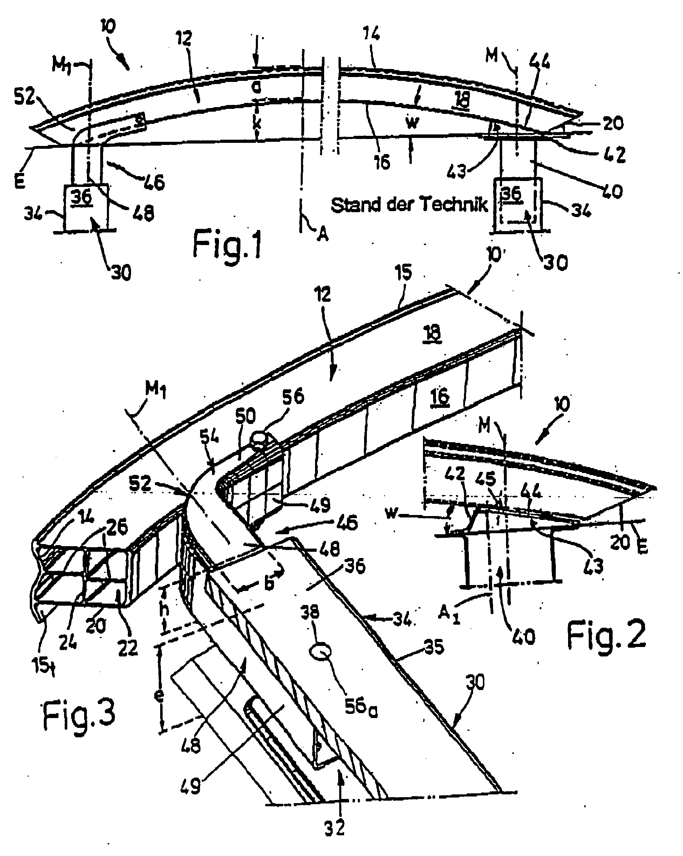

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1:: die Draufsicht auf eine Stoßstange in zwei unterschiedlichen Abschnitten mit an beiden Enden ebenfalls unterschiedlich ausgebildeten Halterungen zum jeweiligen Anschluss an einen Längsträger eines Fahrzeuges;
- Fig. 2:: einen vergrößerten Ausschnitt aus dem rechten der Teil der Fig. 1 nach dem Stande der Technik;
- Fig. 3:: eine Schrägsicht auf den in Fig. 1 linken Teil der Stoßstange mit Halterung sowie einem teilweise geschnittenen Längsträger;
- Fig. 4, 11:: jeweils eine Schrägsicht auf eine Stoßstange mit zwei endwärtigen Halterungen;
- Fig. 5:: die Schrägsicht auf den Gegenstand der Fig. 4 nach einem Aufprall- oder Biegevorgang;
- Fig. 6:: eine vergrößerte Seitenansicht eines Endabschnittes der Stoßstange nach Fig. 5;
- Fig. 7, 9:: jeweils eine Seitenansicht eines Abschnittes einer Stoßstange mit angefügter Halterung einer anderen Ausgestaltung;
- Fig. 8:: die Stoßstange der Fig. 7 nach einem Biegevorgang;
- Fig. 10:: die Stoßstange der Fig. 9 nach einem Biegevorgang;
- Fig. 12:: die gegenüber Fig. 11 vergrößerte Seitenansicht eines Abschnittes der Stoßstange nach einem Biegevorgang;
- Fig. 13:: eine Schrägsicht auf eine horizontal verlaufende Halterung einer weiteren Konzeption;
- Fig. 14:: ein Element aus Fig. 13 in vergrößerter Schrägsicht.
Eine aus einer Aluminiumlegierung stranggepresste Stoßstange 10 für einen aus Gründen der Übersichtlichkeit nicht wiedergegebenen Personenkraftwagen weist gemäß Fig. 1 ein kastenförmiges Hohlprofil 12 mit zwei in Abstand a zueinander verlaufenden Profilwänden 14, 16 auf, die durch zwei Quer- oder Flankenwände 18 verbunden sind. Das Hohlprofil 12 ist einer -- zu der bei A angedeuteten Fahrzeuglängsachse im rechten Winkel verlaufendenQuerebene E zugeordnet sowie beidseits der hier eine Symmetrieebene bildenden Fahrzeuglängsachse A zu jener Querebene E hin gleichmäßig gekrümmt; zu dieser hin bestimmt das Hohlprofil 12 in der im Krümmungszenit liegenden Längsachse A ein Krümmungsmaß k. In Einbaulage bildet die von der Querebene E weg weisende äußere Profilwand 14 einen -- Stoßkräfte aufnehmenden -- Außen- oder Druckgurt, die andere -- innere -- Profilwand 16 einen Innen- oder Zuggurt.

Die Stoßstange 10 ist hier einem Paar von Fahrzeuglängsträgern 30 zugeordnet, die beidseits parallel zur Fahrzeuglängsachse A verlaufen. Sie sind ihrerseits aus zwei parallelen Seitenwänden 34 und diese verbindenden Querwänden 36 zusammengesetzt, die einen in Fig. 3 erkennbaren Innenraum 32 des Fahrzeuglängsträgers 30 begrenzen.

In dem den Stand der Technik wiedergebenden rechten Abschnitt der Fig. 1 ist nahe der Stirnkante 20 des Hohlprofils 12 rechtsseitig ein einends im Längsträger 30 angebrachtes rohrartiges, ebenfalls aus einem aus Leichtmetall stranggepressten Profilelement gefertigte Deformationsorgan 40 als Halterung aus einem Profilelement angedeutet, an dessen anderem Ende ein in Seitenansicht keilförmiges Stützteil 43 festgelegt ist. Dieses weistwie insbesondere aus Fig. 2 hervorgeht -- eine zur Symmetrieachse A hin gerichtete Neigungswand einer Halterplatte 42 auf und ist in Einbaulage über diagonal angeordnete Bohrungen mit der Halterung 40 -- oder dem Fahrzeuglängsträger 30 -- verschraubt. Aus der Halterplatte 42 ist unter Bildung eines Hohlraumes das keilförmige Stützteil 43 ausgeformt. Dieses liegt mit seiner Kopfwand oder Keilschräge 44 dem Zuggurt 16 an und ist in dem durch eine Achsparallele A₁ gekennzeichneten höchstliegenden Bereich des Stützteils 43 über eine Niete 45 mit dem Zuggurt 16 verbunden. Jene Keilschräge 44 bildet mit der Querebene E, die -- wie gesagt -- senkrecht zur Fahrzeuglängsrichtung verläuft, einen Winkel w von beispielsweise 10° zwischen der Querebene E und dem Zuggurt 16.

Eine andere Ausgestaltung des Anschlusses des Hohlprofils 12 an den Fahrzeug-Längsträger 30 ist an dem in Fig. 1 linken Ende der Stoßstange 10 sowie in Fig. 3 skizziert. Deutlich wird hier, dass die als Außengurt dienende, in sich querschnittlich wellenartig gestaltete Profilwand 14 beide Quer- oder Flankenwände 18 mit flügelartigen Wandabschnitten als Kantenstreifen 15, 15ₜ übergreift. Auch lässt Fig. 3 erkennen, dass die Seitenwand 34 des Fahrzeuglängsträgers 30 ebenfalls mit einem Kantenstreifen 35 die Außenfläche der angefügten Querwand 36 überragt. Im übrigen ist hier die zweite Seitenwand 34 aus Gründen der Übersichtlichkeit nicht eingezeichnet sowie deren Befestigungsbereich schraffiert hervorgehoben.

Im Profilinnenraum 22 des Hohlprofils 12 ist einstückig mit den Profilwänden 14, 16 sowie den diese verbindenden Flankenwänden 18 eine -- parallel zu den Profilwänden 14, 16 gerichtete -- Querwand 24 mit jeweils einer zwischen dieser und den Profilwänden 14, 16 verlaufenden Mittelwand 26 vorgesehen. Diese Mittelwände 26 sind zueinander erkennbar höhen- bzw. seitenversetzt.

Der Anschluss des Hohlprofils 12 an den Fahrzeuglängsträger 30 wird hier durch ein aus einem -- seinerseits aus einer Aluminiumlegierung stranggepressten -- als Hohlprofil der Breite b von beispielsweise 55 mm sowie der Höhe h von 75 mm gestalteten Halteglied 46 hergestellt. An dessen dem Fahrzeuglängsträger 30 der Profilhöhe e zugeordneten und in diesem verschraubten Steckabschnitt 48 etwa rechteckigen Querschnitts -- aus zwei parallelen Seitenwänden 49 und diese verbindenden Querwänden 50 des Hohlprofils der Halterung 46 -- schließt ein Krümmungsabschnitt 52 an; die in Fig. 3 rechte Seitenwand 49 ist nach außen -- also hier aus der Längsachse M₁ des Steckabschnittes 48 nach rechts - - gekrümmt und die andere Seitenwand 49 endwärts an diese so herangeführt, dass beide Seitenwände 49 aufeinander liegen und jede der beiden Querwände 50 etwa in ihrer Längsmitte gefaltet ist. Dabei verläuft die innere Krümmungskontur entsprechend der Außenfläche der inneren Profilwand 16 des Hohlprofils 12, d.h. sie schließt mit einer Parallelen zur Querebene E den erwähnten Winkel w ein.

Die doppellagigen Schenkel 54 des so entstandenen rinnenartigen Krümmungsabschnitts 52 werden im Bereich von -- in der Zeichnung nicht erkennbaren -- Durchbrüchen von Schrauben 56 od.dgl. Verbindungsorganen durchsetzt, welche zudem in stoßstangenseitige Durchbrüche der Flankenwände 18 eingreifen. Entsprechende Durchbrüche für Verbindungsorgane 56ₐ sind im Steckabschnitt 48 des Haltegliedes 46 vorgesehen. Diese Verbindungsorgane 56ₐ lagern im Fahrzeuglängsträger 30 in Durchbrüchen 38.

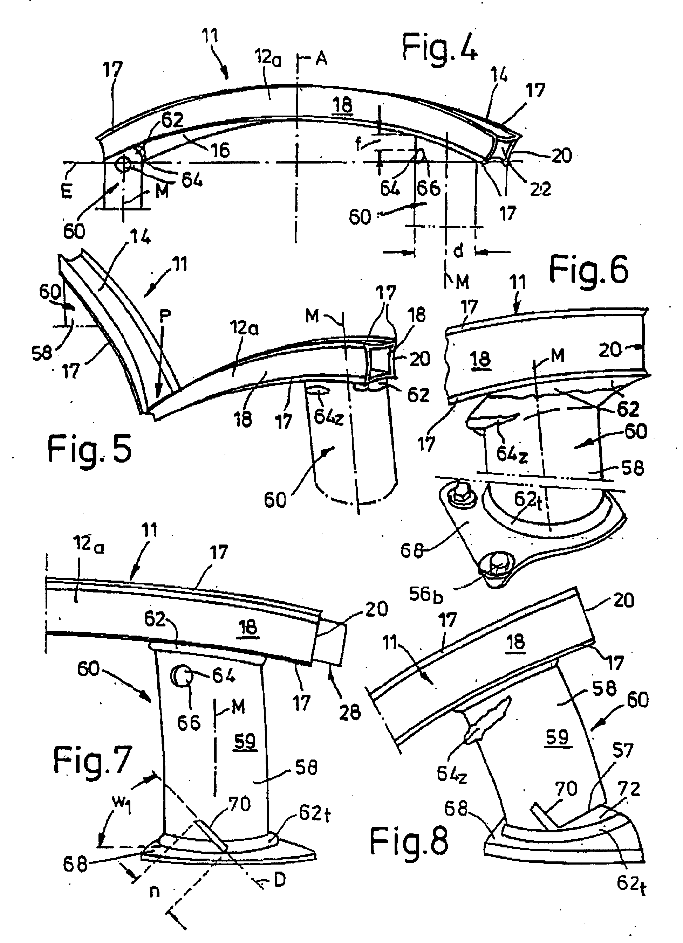

Die Flankenwände 18 sowie die diese verbindenden Profilwände 14, 16 der Stoßstange 11 in Fig. 4, 5 erzeugen einen i.w. quadratischen Querschnitt eines Hohlprofils 12ₐ, dessen Ecken von Profilwülsten 17 bestimmt werden. Nahe jeder der Stirnkanten 20 ist ein Profilelement 60 rohrartiger Formgebung des Durchmessers d aus einer Leichtmetalllegierung an den Zuggurt 16 mit einer Schweißnaht angeschweißt. Die Wandung 58 dieses Profilrohres 60 ist in geringem Abstand f zum Zuggurt 16 mit einem Paar von Wanddurchbrüchen 64 ausgestattet, deren jeder einen etwa kreisförmigen Rand 66 bestimmt; jeder Wanddurchbruch 64 des Deformationsorgans 60 ist unterhalb eines der beiden unteren Profilwulste 17 der Stoßstange 11 vorgesehen.

Wird die Stoßstange 11 bei einem Aufprall -- vor allem bei einem Hochgeschwindigkeitsaufprall oder einem Prall gegen einen stehenden Pfosten -- durch eine beispielsweise in der Längsachse A angreifende äußere Kraft P gemäß Fig. 5 gebogen, wird der zum Deformationsorgan 60 gelangende Kraftanteil durch einen Verformvorgang an den Wanddurchbrüchen 64 kompensiert; letztere werden zu -- etwa parallel zum Zuggurt 16 verlaufenden -- Umfangsschlitzen 64_{z} umgestaltet, und die obere Schweißnaht 62 wird ebenso wenig in Mitleidenschaft gezogen wie eine untere Schweißnaht 62ₜ, welche das Profilelement oder Deformationsorgan 60 während eines Versuches an einer Bodenplatte 68 hält, die gegebenenfalls eine Verbindung mit dem Fahrzeuglängsträger 30 ermöglicht. Diese Bodenplatte 68 ist an einen Partner durch Schrauben 56_{b} angefügt.

Auch an dem mit einer -- ein Einschubprofil 28 aufnehmenden -- Stoßstange 11 verbundenen rohrartigen Deformationselement 60 der Fig. 7, 8 sind zwei Schweißnähte 62, 62ₜ vorgesehen, an deren unteren zwei auf einer gemeinsamen, durch die Mittellinie M des Deformationselementes 60 gelegten Diametralen D angeordnete, in Winkel w₁ von etwa 45° zur Bodenplatte 68 geneigte schmale Schlitze 70 der Länge n vorgesehen sind, die vom unteren Rand 57 des Deformationselementes 60 ausgehen. Vor allem Fig. 8 verdeutlicht, dass diese Sackschlitze 70 ein völliges Ablösen der unteren Schweißnaht 62ₜ nach dem Entstehen eines Teilspaltes 72 zwischen jenem Rand 57 sowie der unteren Schweißnaht 62ₜ verhindern.

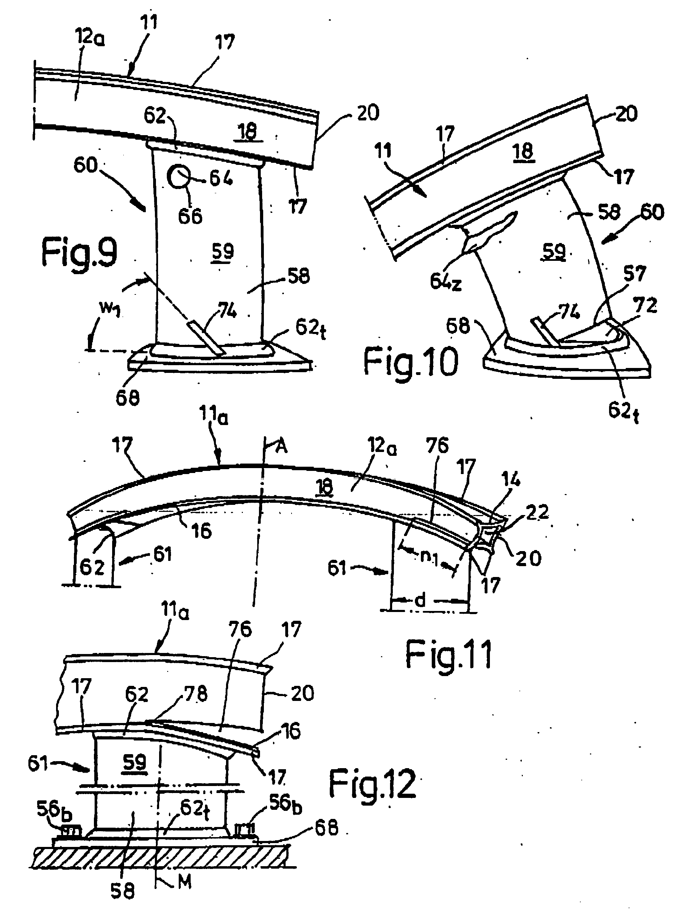

Statt der Sackschlitze 70 sind im Ausführungsbeispiel der Fig. 9, 10 Schweißstäbe 74 der gemeinsamen Diametralen D zugeordnet und in jenem Winkel w₁ geneigt. Diese Schweißstäbe 74 ragen aus der Schweißnaht 62ₜ heraus und liegen zum anderen der Außen- oder Oberfläche 59 des Deformationselementes 60 an. Sie verbinden letzteres auch in geneigter Bruchstellung gemäß Fig. 10 nach dem Entstehen des Teilspaltes 72 zwischen dem Rand 57 des Deformationselementes 60 und der unteren Schweißnaht 62ₜ mit dieser.

Die obere Schweißnaht 62 des rohrartigen Profilelements 61 der Fig. 11, 12 verbindet dieses ebenfalls mit dem Zuggurt 16 einer Stoßstange 11ₐ nahe deren Stirnkante 20. Oberhalb der Halterung bzw. des Profilelements 61 ist in den Flankenwänden 18 der Stoßstange 11ₐ jeweils ein Längs- oder Stirnschlitz 76 zu erkennen, dessen Länge n₁ geringfügig kürzer ist als der Durchmesser d des Profilelements 61. Im dargestellten Ausführungsbeispiel übergreift der Längsschlitz 76 die Mittellinie M der Halterung bzw. des Profilelementes 61, d.h., dass der größere Teil des Querschnitts der Halterung 61 in Nachbarschaft der Längsschlitze 76 an den Zuggurt 16 angeschweißt ist.

In einem der Fig. 5 entsprechenden Belastungsfall öffnet sich dieser Schlitzbereich maulartig; der Zuggurt 16 bleibt in jener Länge n₁ mit dem Profilelement 61 verbunden, und der dort verbleibende obere Teil der Stoßstange 11ₐ klappt um den Endrand oder Schlitzrand 78 des Längsschlitzes 76 nach unten. Auch bei dieser Ausgestaltung werden die Schweißnähte 62, 62ₜ geschont.

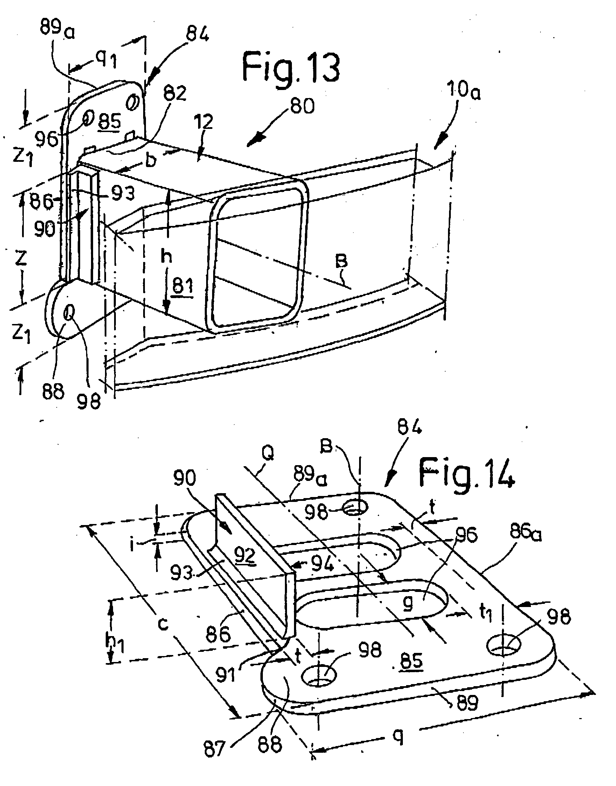

Die Fig. 13, 14 verdeutlichen eine weitere Konzeption einer Halterung 80 für eine nur skizzenhaft angedeutete Stoßstange 10ₐ an einem nicht dargestellten Fahrzeug. Dieses Deformationsorgan 80 etwa quadratischen Querschnitts, dessen Längsachse mit B bezeichnet wird, ist mit seiner der Stoßstange 10ₐ fernen Endkante 82 an eine Heckplatte 84 der Dicke i angeschlossen. Deren Länge c und Breite q bzw. q₁ sind größer als die Höhe h sowie die Breite b des Halterungsquerschnittes.

An der in Fig. 14 dem Betrachter zugekehrten, parallel zur Längsachse Q verlaufenden Längskante 86 der Heckplatte 84 ist eine seitliche Plattenanformung 88 mit teilkreisförmiger, insbesondere halbkreisartiger Kante 87 zu erkennen, welche von der Längskante 86 aus sowie in eine dieser benachbarten Querkante 89 übergeht. Der letzteren Gesamtlänge q ist somit größer als die Länge q₁ der anderen Querkante 89ₐ. An jener Plattenanformung 88 beginnt nahe der Längskante 86 ein dieser parallel benachbarter, von der Oberfläche 85 aufragender seitlicher Steg 90 der Höhe h₁ sowie der axialen Länge z, die etwa dem doppelten Maß der Höhe h₁ entspricht. Dieser Flankensteg 90 endet jeweils in einem axialen Abstand z₁ zu den Querkanten 88, 88ₐ der Heckplatte 84. Dieser Abstand z₁ entspricht im Übrigen ebenfalls etwa der halben Länge z des Flankensteges 90.

An die Fußkante des Flankensteges 90 ist im Bereich von dessen Außenfläche 92 ein geneigter, sich zur Längskante 91 querschnittlich erweiternder Sockelstreifen 91 der Sitzverstärkung angeformt. Der Abstand t seiner Innenfläche 92 von der benachbarten Längskante 86 der Heckplatte 84 ist der besseren Übersicht halber auch an der anderen Längskante 86ₐ angedeutet; sein Maß entspricht etwa dem halben Abstand t₁ der Langlöcher 94 von jener Längskante 86ₐ.

Nahe jenem Flankensteg 90 enden im Übrigen zwei zu dessen Innenfläche 92 rechtwinklig in der Heckplatte 84 verlaufende Langlöcher 96 der Breite g, die anderseits kurz vor der freien Längskante 86a enden. In den Bereichen der Plattenecken ist jeweils ein Durchbruch 98 zur Aufnahme eines nicht gezeigten Verbindungsorgans -- etwa einer Verbindungsschraube -- zu erkennen.

Diese Heckplatte 84 ist, wie gesagt, das Anschlagorgan für ein entsprechendes Anschlusselement des in Fig. 13, 14 nicht dargestellten Längsträgers 30 und bietet mit seinem - - einer äußeren Seitenwandfläche 81 der Halterung 80 anliegenden -- Flankensteg 90 eine besonders günstige Lagesicherheit. Insgesamt bildet die Heckplatte 84 ein endwärtiges Verstärkungsorgan für den Anschluss der Stoßstange 12ₐ an den Längsträger 30.

## Patentansprüche

1. Stoßstange (10, 10a, 11, 11a) mit von ihr abragenden Halterungen (60, 61, 80) zum Befestigen an Längsträgern (30) eines Fahrzeuges, wobei an der Stoßstange in Abstand zueinander als Druckgurt bzw. Zuggurt angeordnete Profilwände (14, 16) und ein Paar diese verbindender Flankenwände (18) ein Hohlprofil (12, 12a) bilden, wobei die Einheit aus Stoßstange (10, 10a, 11, 11a) und Halterung (60, 61, 80) mit Kompensationselementen (64, 70, 74, 76, 84) ausgestattet ist, welche durch die Stoßstange beeinflussende Druckkräfte (P) auslösbare Verformungen an der Halterung begrenzenund wobei dem der Stoßstange (10a) fernen Ende der Halterung (80) bzw. deren Endkante (82) als Anschlussorgan eine Heckplatte (84) anliegt, wobei letztere mit der Halterung verschweißt ist, **dadurch gekennzeichnet, dass** nahe einer Längskante (86) der Heckplatte (84) sowie parallel dazu letzterer ein Flankensteg (90) angeformt ist, der in Einbaustellung einer Seitenwandaußenfläche (81) der Halterung (80) anliegt.

2. Stoßstange nach Anspruch 1, **dadurch gekennzeichnet, dass** die Halterung (60) zumindest einends angeschweißt sowie nahe der Schweißnaht (62) mit wenigstens einem lochartigen Wanddurchbruch (64) in ihrer Wandung (58) ausgestattet ist.

3. Stoßstange nach Anspruch 2, **dadurch gekennzeichnet, dass** den der Halterung (60) benachbarten beiden Randbereichen (17) der Stoßstange (11) jeweils ein seitlicher Wanddurchbruch (64) zugeordnet ist (Fig. 4).

4. Stoßstange nach Anspruch 2 oder 3, **gekennzeichnet durch** einen etwa kreisförmigen Rand (66) des Wanddurchbruches (64).

5. Stoßstange nach einem der Ansprüche 1 bis 4, **dadurch gekennzeichnet, dass** dem der Stoßstange (11) fernen Randbereich der Halterung (60) zumindest ein zu einer ihre Mittellinie (M) kreuzenden Diametralebene geneigter Sackschlitz (70) zugeordnet ist, der von dem Rand (57) der Halterung ausgeht, wobei bevorzugt zwei zueinander parallele Sackschlitze vorgesehen sind.

6. Stoßstange nach einem der Ansprüche 1 bis 4, **dadurch gekennzeichnet, dass** dem der Stoßstange (11) fernen Randbereich der Halterung (60) zumindest ein zu einer ihre Mittellinie (M) kreuzenden Diametralebene geneigter Stab (74) zugeordnet ist, der aus einer Schweißnaht (62t) ragt und der Oberfläche (59) der Wandung (58) anliegt, wobei insbesondere zwei parallele Stäbe (70) an der äußeren Oberfläche (59) der Wandung (58) angeordnet sind.

7. Stoßstange nach Anspruch 1, **dadurch gekennzeichnet, dass** von der Stirnkante (20) der Stoßstange (11a) ein Paar von Längs- oder Stirnschlitzen (76) ausgeht, deren jeder in einer der Flankenwände (18) in deren an den Innen- oder Zuggurt (16) der Stoßstange anschließenden Bereich angeordnet ist (Fig. 12).

8. Stoßstange nach Anspruch 7, **dadurch gekennzeichnet, dass** die Halterung (61) mit dem Zuggurt (16) durch eine Schweißnaht (62) so verbunden ist, dass ein Teil der Wandung (58) dieser Halterung unterhalb der Stirnschlitze (76) angefügt ist, wobei der Stirnschlitz die Mittellinie (M) der Halterung übergreift und der Endrand (78) des Stirnschlitzes der Mittellinie benachbart ist.

9. Stoßstange nach Anspruch 7 oder 8, **dadurch gekennzeichnet, dass** die Länge (n₁) des Stirnschlitzes (76) kürzer ist als der Durchmesser (d) der Halterung (61).

10. Stoßstange nach einem der Ansprüche 1 bis 6, **dadurch gekennzeichnet, dass** die Halterung (60) sowohl die Wanddurchbrüche (64) enthält als auch an ihrer äußeren Oberfläche (59) mit den Sackschlitzen (70) oder den Stäben (74) ausgestattet ist.

11. Stoßstange nach einem der Ansprüche 1 bis 10, **dadurch gekennzeichnet, dass** den Längs- oder Stirnschlitzen (76) der Stoßstange (11a) die Wanddurchbrüche (64) der Halterung (60) und/oder die Stäbe (74) an deren Außen- oder Oberfläche (59) zugeordnet sind.

12. Stoßstange nach einem der Ansprüche 1 bis 11, **dadurch gekennzeichnet, dass** den Längs- oder Stirnschlitzen (76) der Stoßstange (11a) die Wanddurchbrüche (64) der Halterung (60) und/oder die Sackschlitze (70) zugeordnet sind.

13. Stoßstange nach einem der Ansprüche 1 bis 12, **dadurch gekennzeichnet, dass** die Heckplatte (84) mit der Endkante (82) der Halterung verschweißt ist.

14. Stoßstange nach Anspruch 13, **gekennzeichnet durch** eine rechteckige Außenkontur der die Längsachse (B) der Halterung (80) querenden Heckplatte (84), deren Längskanten (86, 86a) länger sind als ihre Querkanten (89, 89a), wobei an einem der Übergänge einer Querkante (89) zu einer Längskante (86) an letztere eine Plattenanformung (88) mit teilkreisförmiger Kante (87), insbesondere eine etwa halbkreisförmige Kante angeformt ist.

15. Stoßstange nach Anspruch 14, **dadurch gekennzeichnet, dass** etwa im Zentrum der durch die Kante (87) bestimmten Fläche der in ihrer Dicke (i) jener der übrigen Heckplatten (84) entsprechenden Plattenanformung (88) ein Durchbruch (98) vorgesehen ist und/oder in den Bereichen der Übergänge der Querkanten (89, 89a) zu den Längskanten (86, 86a) jeweils zumindest ein Durchbruch für ein Verbindungsorgan angeordnet ist.

16. Stoßstange nach einem der vorhergehenden Ansprüche **dadurch gekennzeichnet, dass** an die Außenfläche (92) des Flankensteges ein seine der Heckplatte (84) zugeordnete Längskante (91) verstärkender Sockelstreifen (93) angeformt ist, der insbesondere unter Bildung einer zur benachbarten Längskante (86) der Heckplatte geneigten Oberfläche einen sich zu seiner Längskante (91) hin erweiternden Querschnitt aufweist (Fig. 13).

17. Stoßstange nach einem der vorgehenden Ansprüche, **dadurch gekennzeichnet, dass** die axiale Länge (z) des Flankensteges (90) etwa der doppelten Länge seiner axialen Abstände (z1) von den Querkanten (89) der Heckplatte (84) und/oder die Höhe (h1) des Flankensteges (90) etwa dessen halber Länge (z) entspricht.

18. Stoßstange nach Anspruch 16 oder 17, **dadurch gekennzeichnet, dass** sich zwischen dem Flankensteg (90) sowie der ihm fern liegenden Längskante (86a) der Heckplatte (84) zu deren Querkanten (89, 89a) parallele Langlöcher (96) erstrecken, die bevorzugt die Längsachse (Q) der Heckplatte (84) kreuzen.

19. Stoßstange nach Anspruch 18, **gekennzeichnet durch** zwei Langlöcher (96), deren jeweiliger Abstand zur Innenfläche (94) des Flankensteges (90) etwa dem halben Abstand (t1) zur Längskante (86a) entspricht.

## Claims

1. A bumper (10, 10a, 11, 11a) with supports (60, 61, 80) protruding therefrom, for fastening to longitudinal members (30) of a vehicle, profile walls (14, 16) arranged spaced apart from one another as a compression chord and/or tension chord and a pair of flank walls (18) connecting said profile walls forming a hollow profile (12, 12a) on the bumper, the unit consisting of the bumper (10, 10a, 11, 11a) and the support (60, 61, 80) being provided with compensation elements (64, 70, 74, 76, 84) which limit deformations on the support which may be triggered by compressive forces (P) affecting the bumper, and a rear plate (84) bearing as a connecting member against the end of the support (80) remote from the bumper (10a) and/or the terminal edge (82) of said support, said rear plate being welded to the support, **characterised in that** a flank projection (90) is integrally formed in the vicinity of a longitudinal edge (86) of the rear plate (84) and parallel thereto, said flank projection bearing against a side wall outer surface (81) of the support (80) in the installed position.

2. The bumper according to Claim 1, **characterised in that** the support (60) is welded onto at least one end and is provided in the vicinity of the welded seam (62) with at least one hole-type wall aperture (64) in the wall (58) thereof.

3. The bumper according to Claim 2, **characterised in that** in each case a lateral wall aperture (64) is assigned to the two edge regions (17) of the bumper (11) adjacent to the support (60) (Fig. 4).

4. The bumper according to Claim 2 or 3, **characterised by** an approximately circular edge (66) of the wall aperture (64).

5. The bumper according to one of Claims 1 to 4, **characterised in that** at least one blind slot (70), which is inclined relative to a diametral plane intersecting the central line (M) thereof, is assigned to the edge region of the support (60) remote from the bumper (11), said blind slot running from the edge (57) of the support, preferably two blind slots being provided parallel to one another.

6. The bumper according to one of Claims 1 to 4, **characterised in that** at least one rod (74), which is inclined relative to a diametral plane intersecting the central line (M) thereof, is assigned to the edge region of the support (60) remote from the bumper (11), said rod protruding from a welded seam (62t) and bearing against the surface (59) of the wall (58), in particular two parallel rods (70) being arranged on the outer surface (59) of the wall (58).

7. The bumper according to Claim 1, **characterised in that** a pair of longitudinal slots or front slots (76) run from the front edge (20) of the bumper (11a), each of said slots being arranged in one of the flank walls (18) in the region thereof adjacent to the internal chord or tension chord (16) of the bumper (Fig. 12).

8. The bumper according to Claim 7, **characterised in that** the support (61) is connected to the tension chord (16) by a welded seam (62) such that a part of the wall (58) of said support is joined-on below the front slots (76), the front slot overlapping the central line (M) of the support and the terminal edge (78) of the front slot being adjacent to the central line.

9. The bumper according to Claim 7 or 8, **characterised in that** the length (nl) of the front slot (76) is shorter than the diameter (d) of the support (61).

10. The bumper according to one of Claims 1 to 6, **characterised in that** the support (60) not only contains the wall aperture (64) but is also provided on its outer upper surface (59) with the blind slots (70) or the rods (74).

11. The bumper according to one of claims 1 to 10, **characterised in that** the wall apertures (64) of the support (60) and/or the rods (74) on the outer surface or upper surface (59) thereof are assigned to the longitudinal slots or front slots (76) of the bumper (11a).

12. The bumper according to one of Claims 1 to 11, **characterised in that** the wall apertures (64) of the support (60) and/or the blind slots (70) are assigned to the longitudinal slots or front slots (76) of the bumper (11a).

13. The bumper according to one of Claims 1 to 12, **characterised in that** the rear plate (84) is welded to the terminal edge (82) of the support.

14. The bumper according to Claim 13, **characterised by** a rectangular outer contour of the rear plate (84) traversing the longitudinal axis (B) of the support (80), the longitudinal edges (86, 86a) of said rear plate being longer than the transverse edges (89, 89a) thereof, a shaped plate portion (88) with an edge (87) in the shape of a pitch circle, in particular an approximately semi-circular edge, being integrally formed on one of the transitions between a transverse edge (89) and a longitudinal edge (86).

15. The bumper according to Claim 14, **characterised in that** approximately in the centre of the surface of the shaped plate portion (88) defined by the edge (87), said surface corresponding in its thickness (i) to that of the remaining rear plate (84), an aperture (98) is provided and/or in each case at least one aperture for a connecting member is arranged in the regions of the transitions between the transverse edges (89, 89a) and the longitudinal edges (86, 86a).

16. The bumper according to one of the preceding claims, **characterised in that** a base strip (93) reinforcing the longitudinal edge (91) of the flank projection, assigned to the rear plate (84), is integrally formed on the outer surface (92) of the flank projection, said base strip having a cross section which widens toward its longitudinal edge (91), in particular by forming a surface which is inclined relative to the adjacent longitudinal edge (86) of the rear plate (Fig. 13).

17. The bumper according to one of the preceding claims, **characterised in that** the axial length (z) of the flank projection (90) corresponds to approximately double the length of its axial spacings (zl) from the transverse edges (89) of the rear plate (84) and/or the height (h1) of the flank projection (90) corresponds to approximately half the length (z) thereof.

18. The bumper according to Claim 16 or 17, **characterised in that** slots (96) parallel to the transverse edges (89, 89a) thereof extend between the flank projection (90) and the longitudinal edge (86a) of the rear plate (84) located remotely therefrom, said slots preferably intersecting the longitudinal axis (Q) of the rear plate (84).

19. The bumper according to Claim 18, **characterised by** two slots (96), the respective spacing thereof from the inner surface (94) of the flank projection (90) corresponding approximately to half the spacing (t1) relative to the longitudinal edge (86a).

## Revendications

1. Pare-chocs (10, 10a, 11, 11a) comprenant des éléments de support (60, 61, 80) faisant saillie depuis celui-ci pour la fixation à des supports longitudinaux (30) d'un véhicule, des parois profilées (14, 16) disposées au niveau du pare-chocs à distance les unes des autres en tant que courroie de pression ou de courroie de traction et une paire de parois de flanc (18) reliant celles-ci formant un profilé creux (12, 12a), l'unité constituée du pare-chocs (10, 10a, 11, 11a) et de l'élément de support (60, 61, 80) étant munie d'éléments de compensation (64, 70, 74, 76, 84) qui limitent les déformations au niveau de l'élément de support pouvant être produites par des forces de pression (P) affectant le pare-chocs, et une plaque arrière (84) s'appliquant en tant qu'organe de raccordement contre l'extrémité éloignée du pare-chocs (10a) de l'élément de support (80) ou contre son arrête d'extrémité (82), ladite plaque arrière étant soudée à l'élément de support, **caractérisé en ce qu'**à proximité d'une arête longitudinale (86) de la plaque arrière (84) et parallèlement à celle-ci est façonnée une nervure de flanc (90) qui s'applique dans la position d'installation contre une surface extérieure de paroi latérale (81) de l'élément de support (80).

2. Pare-chocs selon la revendication 1, **caractérisé en ce que** l'élément de support (60) est fixé par soudage au moins à une extrémité et est muni, à proximité du joint de soudure (62), d'au moins un orifice de paroi en forme de trou (64) dans sa paroi (58).

3. Pare-chocs selon la revendication 2, **caractérisé en ce qu'**un orifice de paroi latéral (64) est à chaque fois associé aux deux régions de bord (17) du pare-chocs (11) adjacentes à l'élément de support (60) (figure 4).

4. Pare-chocs selon la revendication 2 ou 3, **caractérisé par** un bord approximativement circulaire (66) de l'orifice de paroi (64).

5. Pare-chocs selon l'une quelconque des revendications 1 à 4, **caractérisé en ce qu'**au moins une fente borgne (70) inclinée par rapport à un plan diamétral croisant son axe médian (M) est associée à la région de bord de l'élément de support (60) éloignée du pare-chocs (11), ladite fente borgne partant du bord (57) de l'élément de support, de préférence deux fentes borgnes parallèles l'une à l'autre étant prévues.

6. Pare-chocs selon l'une quelconque des revendications 1 à 4, **caractérisé en ce qu'**au moins une barre (74) inclinée par rapport à un plan diamétral croisant son axe médian (M) est associée à la région de bord de l'élément de support (60) éloignée du pare-chocs (11), ladite barre faisant saillie d'un joint de soudure (62t) et s'appliquant contre la surface supérieure (59) de la paroi (58), notamment deux barres parallèles (70) étant disposées au niveau de la surface extérieure (59) de la paroi (58).

7. Pare-chocs selon la revendication 1, **caractérisé en ce qu'**une paire de fentes longitudinales ou frontales (76) part de l'arête frontale (20) du pare-chocs (11a), chacune d'entre elles étant disposée dans l'une des parois de flanc (18) dans sa région se raccordant à la courroie interne ou la courroie de traction (16) du pare-chocs (figure 12).

8. Pare-chocs selon la revendication 7, **caractérisé en ce que** l'élément de support (61) est connecté à la courroie de traction (16) par un joint de soudure (62) de telle sorte qu'une partie de la paroi (58) soit réunie à cet élément de support en dessous des fentes frontales (76), la fente frontale venant en prise par le dessus avec l'axe médian (M) de l'élément de support et le bord d'extrémité (78) de la fente frontale étant adjacent à l'axe médian.

9. Pare-chocs selon la revendication 7 ou 8, **caractérisé en ce que** la longueur (n1) de la fente frontale (76) est plus courte que le diamètre (d) de l'élément de support (61).

10. Pare-chocs selon l'une quelconque des revendications 1 à 6, **caractérisé en ce que** l'élément de support (60) non seulement contient les orifices de paroi (64) mais est également muni au niveau de sa surface extérieure (59) des fentes borgnes (70) ou des barres (74).

11. Pare-chocs selon l'une quelconque des revendications 1 à 10, **caractérisé en ce qu'**aux fentes longitudinales ou frontales (76) du pare-chocs (11a) sont associés les orifices de paroi (64) de l'élément de support (60) et/ou les barres (74) au niveau de leur surface extérieure ou supérieure (59).

12. Pare-chocs selon l'une quelconque des revendications 1 à 11, **caractérisé en ce qu'**aux fentes longitudinales ou frontales (76) du pare-chocs (11a) sont associés les orifices de paroi (64) de l'élément de support (60) et/ou les fentes borgnes (70).

13. Pare-chocs selon l'une quelconque des revendications 1 à 12, **caractérisé en ce que** la plaque arrière (84) est soudée à l'arête d'extrémité (82) de l'élément de support.

14. Pare-chocs selon la revendication 13, **caractérisé par** un contour extérieur rectangulaire de la plaque arrière (84) transversale à l'axe longitudinal (B) de l'élément de support (80), dont les arêtes longitudinales (86, 86a) sont plus longues que ses arêtes transversales (89, 89a), une pièce façonnée (88) sur la plaque étant façonnée au niveau de l'une des transitions d'une arête transversale (89) à une arête longitudinale (86) au niveau de cette dernière avec une arête en forme de cercle partiel (87), en particulier une arête en forme de demi-cercle.

15. Pare-chocs selon la revendication 14, **caractérisé en ce qu'**approximativement au centre de la surface définie par l'arête (87) de la pièce façonnée (88) sur la plaque dont l'épaisseur (i) correspond à celle des autres plaques arrière (84), un orifice (98) est prévu, et/ou dans les régions des transitions des arêtes transversales (89, 89a) aux arêtes longitudinales (86, 86a) est à chaque fois réalisé au moins un orifice pour un organe de connexion.

16. Pare-chocs selon l'une quelconque des revendications précédentes, **caractérisé en ce qu'**au niveau de la surface extérieure (92) de la nervure de flanc est façonnée une bande d'embase (93) renforçant son arête longitudinale (91) associée à la plaque arrière (84), laquelle bande d'embase présente une section transversale s'élargissant en direction de son arête longitudinale (91), notamment en formant une surface supérieure inclinée par rapport à l'arête longitudinale adjacente (86) de la plaque arrière (figure 13).

17. Pare-chocs selon l'une quelconque des revendications précédentes, **caractérisé en ce que** la longueur axiale (z) de la nervure de flanc (90) correspond approximativement au double de la longueur de ses distances axiales (z1) depuis les arêtes transversales (89) de la plaque arrière (84) et/ou la hauteur (h1) de la nervure de flanc (90) correspond approximativement à la moitié de sa longueur (z).

18. Pare-chocs selon la revendication 16 ou 17, **caractérisé en ce qu'**entre la nervure de flanc (90) et l'arête longitudinale (86a) de la plaque arrière (84) éloignée de celle-ci s'étendent des trous oblongs (96) parallèles à ses arêtes transversales (89, 89a), lesquels croisent de préférence l'axe longitudinal (Q) de la plaque arrière (84).

19. Pare-chocs selon la revendication 18, **caractérisé par** deux trous oblongs (96), dont la distance respective à la surface interne (94) de la nervure de flanc (90) correspond approximativement à la moitié de la distance (t1) à l'arête longitudinale (86a).
